# EUROPÄISCHE PATENTSCHRIFT

(11) **EP 0 326 938 B1**
(45) Veröffentlichungstag und Bekanntmachung des Hinweises auf die Patenterteilung: **22.12.1993**
(21) Anmeldenummer: 89101325.2
(22) Anmeldetag: 26.01.1989
(51) Int. Cl.: C08L 69/00, C08F 291/02

(54) **Schlagzäh-modifiziertes Polycarbonat**
Impact-modified polycarbonate
Polycarbonate modifié à résistance élevée aux chocs

(30) Priorität: 05.02.1988 DE 3803405
(43) Veröffentlichungstag der Anmeldung: 09.08.1989
(73) Patentinhaber: Röhm GmbH, 64293 Darmstadt (DE)
(72) Erfinder: Fischer, Jens-Dieter, Dr., D-6100 Darmstadt (DE); Siol, Werner, Dr., D-6100 Darmstadt-Eberstadt (DE); Munzer, Manfred, Dr., D-6140 Bensheim 1 (DE); Rhein, Thomas, Dr., D-6501 Stadecken-Elsheim (DE)

(56) Entgegenhaltungen:
- EP-A- 0 144 231
- EP-A- 0 321 878
- JP-A-62 004 711
- Database Chemical Abstract, Bd. 107, Nr. 18
- Derwent Publ. Nr. 87-046814(07)

## Beschreibung

Die Erfindung betrifft schlagzähmodifizierte thermoplastische Formmassen aus aromatischem Polycarbonat und einem zweiphasigen Mischpolymerisat als Schlagzüh-Modifizierungsmittel.

Von den Werkstoffen zur Herstellung geformter Kunststoffteile, haben Thermoplaste eine besondere Bedeutung, insbesondere solche Thermoplaste, die Wärmestandfestigkeiten deutlich über 100 Grad C aufweisen. Zu den Thermoplasten mit relativ hohen Wärmestandfestigkeiten gehören die Polycarbonate, wobei es sich bei diesen normalerweise immer um Polykondensate auf der Basis von Bisphenol A handelt. Das Polycarbonat auf der Basis von Tetramethylbisphenol A, seinerseits ein Kondensationsprodukt von 2,6-Dimethylphenol und Aceton, zeichnet sich gegenüber dem "normalen" Bisphenol A-Polycarbonat mit einer um ca 50 Grad C höheren Einfriertemperatur aus. Sein Vicat B-Erweichungspunkt liegt bei 198 Grad C und es ist noch thermoplastisch verarbeitbar.
Für viele wünschenswerte Anwendungen von Kunststoffen, z.B. im Automobil- und Fahrzeugbau, sind aber noch Verbesserungen ihrer Eigenschaften notwendig. Bei Kunststoffen, die als moderne Konstruktionswerkstoffe immer mehr Bedeutung erlangen, ist die Zähigkeit bei Schlagbeanspruchung eine wichtige Eigenschaft. Ein Maß für die Zähigkeit eines Kunststoffs ist der nach DIN 53 453 experimentell bestimmbare Wert der Kerbschlagzähigkeit, der Auskunft gibt, wie ein polymerer Werkstoff schlagartig aufgenommene mechanische Belastungen verbraucht und umwandelt.

Seit längerer Zeit besteht in der Technik die Aufgabe, relativ spröde Kunststoffe in technisch brauchbare Produkte mit verbesserter Schlagzähigkeit überzuführen. Eine Methode, die Zähigkeit von Thermoplasten, auch von Polycarbonat, zu verbessern, ist deren Kautschuk-Elastifizierung, wie dies von D. Neuray u. K.H. Ott in Angew. Makromol. Chem. 98, 213 - 224 (1981) berichtet wird. Darin wird auch betont, daß dabei die Kautschuksegmente in der Thermoplast-Matrix verankert bzw. "angekoppelt" sein müssen, da ansonsten, auch bei steigendem Elastomerengehalt, keine Verbesserung der Zähigkeit erreicht wird. Die Verankerung der Elastomeren wird z.B. über Pfropfung der Kautschuke mit Polymeren aus Monomeren, die für sich allein zu Thermoplasten polymerisierbar sind, erreicht.

Die Schlagzähverbesserung von Polycarbonat durch Zusatz von Pfropfelastomeren ist öfter beschrieben. So empfehlen die DE-OS 26 53 143 bzw. die DE-OS 26 53 145 Pfropfpolymerisate von Styrol und/oder Methylmethacrylat und/oder (Meth)Acrylnitril auf Dien- bzw. EPDM-Kautschuk zur Herstellung von thermoplastischen Formmassen mit Polycarbonat. In der DE-OS 32 45 292 wird eine thermoplastische Formmasse aus Polycarbonat und einem Mischpolymerisat beschrieben, das aus einem Polymerisat mit mehrschichtigem Aufbau besteht, wobei der Kern ein Acrylkautschuk ist, und den eine Pfropfhülle aus insbesondere (α-Methyl)Styrol/Acrylnitril/Methylmethacrylat aufgezogen ist, auf das weiter eine zusätzliche seperat hergestellte Hartkomponente, hergestellt aus den Monomeren Styrol, α-Methylstyrol, Acrylnitril, Methylmethacrylat, Maleinsäureanhydrid und/oder Acrylsäure, enthält.
Die europäische Patentanmeldung 0 036 127 beschreibt Polycarbonate mit verbesserter Schlagzähigkeit in Form eines Gemisches eines Polycarbonatharzes und einer Acrylkautschuk-Interpolymerverbindung, die Diallylmaleat als pfropfendes Monomeres und Methylmethacrylat als Monomeres der zweiten Polymerphase enthält.
Ein Polymerblend aus Polycarbonat und einem EPDM-g-Methylmethacrylat/N-Phenylmaleinimid-Pfropfpolymerisat ist in der europäischen Patentanmeldung 0 144 213 beschrieben.
Weiter sind aus der europäischen Patentanmeldung 260 558 termoplastische Massen aus Polycarbonaten und thermoplastischen Pfropfpolymerisaten auf Silikonkautschuken mit guter Zähigkeit bekannt geworden, wobei die Silikonkautschuke zur besseren Bepfropfung mit den harzbildenden Monomeren mit einer Zwischenhülle aus vernetztem Acrylkautschuk versehen sind.
Die DE-OS 31 18 526 beschreibt thermoplastische Formmassen aus Polyalkylenterephthalat, Polycarbonat und einem Pfropfpolymerisat, wobei das Pfropfpolymerisat auch ein Acrylkautschuk-Kern, aufgebaut mit aromatischen Estern, wie Benzylacrylat und Phenylethylacrylat, sein kann.

Verträgliche Polymermischungen aus Polycarbonat und thermoplastisch verformbaren Methylmethacrylat-Copolymerisaten sind bekannt. Die Verträglichkeit des Polymethylmethacrylats wird nach der deutschen Patentanmeldung P 36 32 946.0 mit N-cyclisch substituierten (Meth)acrylamiden oder nach der deutschen Patentanmeldung 37 09 562.5 mit N-Cyclohexyl- oder N-Phenyl-substituierten Maleinimiden oder nach der deutschen Anmeldung P 37 19 239.6 mit cycloaliphatischen bzw. aromatischen (Meth)acrylestern, als Comonomere, herbeigeführt.

### Aufgabe und Lösung

Die Erfindung stellt sich die Aufgabe, Polycarbonate mit verbesserter Schlagzähigkeit bzw. Kerbschlagzähigkeit verfügbar zu machen. Dabei ist die Verbesserung der Kerbschlagzähigkeit für tiefe Temperaturen, d.h. für das Temperaturgebiet von 0 bis etwa -50 Grad C, wegen der Anwendung von schlagzähmodifizierten Polycarbonat-Blends, beispielsweise als Fahrzeugteile, besonders wichtig, und soll ohne wesentliche Beeinträchtigung der anderen Eigenschaften ermöglicht werden.

Diese Aufgabe wird durch die Erfindung gelöst. Überraschenderweise wurde gefunden, daß die nach obigem Stand der Technik bekannten und als gut mit Polycarbont verträglichen Methylmethacrylat-Copolymerisate, als harte Phase mit einer Gummi(Elastomer)-Phase kombiniert und auf diese aufpolymerisiert, hervorragend geeignete Schlagzäh-Modifizierungsmittel für Polycarbonat sind. Damit wurden Schlagzäh-Modifizierungsmittel gefunden, mit denen die Zähphase (Elastomerphase) durch, mit der kohärenten Phase für sich gut verträglichen Copolymere, im Polycarbonat verankert wird. Die die Verankerung bewirkenden Methylmethacrylat-Copolymeren können als Pfropfäste oder als Schalen auf der Zähphase angebracht sein.

Die Erfindung betrifft Thermoplastische Formmassen und Formkörper aus
95 bis 30 Gew.-% von Polycarbonaten zweiwertiger Phenole insbesondere auf Bisphenol-A-Basis und
5 bis 70 Gew.-% eines mindestens zweiphasigen Mischpolymerisates als Schlagzäh-Modifizierungsmittel,
bestehend aus
A) mehr als 20 bis 90 Gew.-% eines gegebenenfalls vernetzten Polymeren P mit einer Glastemperatur Tg ≦ 10 Grad C, bevorzugt ≦ -10 Grad C, und
B) weniger als 80 bis 10 Gew.-% eines mit A) wenigstens teilweise kovalent verknüpften, für sich mit Polycarbonat verträglichen Methylmethacrylat-Copolymerisats mit einer Glastemperatur Tg > 30 Grad C der statistischen Zusammensetzung: 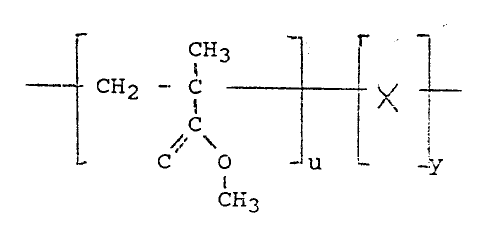 mit
   - X =: 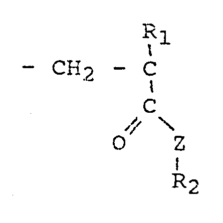 wobei
   - Z =: - O - und/oder - NH -
   - R₁ =: - H und/oder -CH₃
   - R₂ =: (̵CH₂)̵ₙ W mit n = 0 bis 5,
   worin W, wenn Z = - O -, ein gegebenenfalls Alkylsubstituierter Arylrest mit 6 bis 12 C-Atomen ist, und
   wenn Z = - NH -, ein gegebenenfalls substituierter Arylrest mit 6 bis 12 C-Atomen, oder ein gegebenenfalls substituierter Cycloalkylrest mit 5 bis 9 C-Atomen ist, wobei
   - u: zwischen 10 bis 98 Gew.-% (bevorzugt 50 - 95 Gew.-%) und
   - y: zwischen 2 bis 90 Gew.-%, bevorzugt 5 - 50 Gew.-%, bei
   - u+y =: 100 Gew.-%
liegen, und das in Mengen von 0 bis 15 Gew.-% noch weitere Comonomere enthalten kann.

Durch die unter B) beschriebenen Methylmethacrylat-Copolymerisate und wenigstens teilweise kovalent gebundenen Copolymerästen bzw. Copolymerschalen wird die Zähphase A) in der Polycarbonat-Matrix molekular verankert, wodurch ein Polymer-Gemisch (Blend) mit herausragenden mechanischen Eigenschaften gebildet wird.

Für die Herstellung der Schlagzäh-Modifizierungsmittel werden als Zähphase A) Polymere P mit einer Glastemperatur Tg ≦ 10 Grad C, vorzugsweise ≦ -10 Grad C, eingesetzt, worunter Polymerisate fallen, die gewöhnlich unter der Bezeichnung Kautschuk zusammengefaßt werden. Die Polymeren der Komponente A) sind gegebenenfalls vernetzt. Ihre Glasstemperatur Tg-Bestimmung kann nach Edith. A. TURI "Thermal Characterization of Polymeric Materials" S. 169 ff, Academic Press, New York 1981, vorgenommen werden. Als Polymere P für die Zähphase A) werden vorzugsweise solche ausgewählt aus der Gruppe, bestehend aus Polyolefinen, Polydienen, Ethylen-Vinylacetat-Copolymeren, Polyacrylaten, Polysiloxane, (s. dazu Ullmanns Encyklopädie der technischen Chemie, 4. Auflage, Band 13, Seiten 595 bis 635, Verlag Chemie 1977). Herstellungsweisen dieser Kautschuke mit ihren Eigenschaften, wie Löslichkeiten und Viskositäten, sowie ihre Molekularmassen Mw, sind in der angegebenen Literaturstelle angegeben.

Bevorzugt als Zähphasen A) werden Terpolymerisate aus Ethylen, Propylen und einem Dien, die sogenannten EPDM-Typen, und Acrylatkautschuke. Diese Polyacrylate werden vorzugsweise durch Polymerisation in wäßriger Emulsion, teilweise auch in Suspension nach einschlägig bekannten Verfahren hergestellt (Ullmanns Encyklopädie der technischen Chemie, 4. Auflage, Band 19, Seiten 125 bis 137, Verlag Chemie 1980).

Für die Herstellung des mit A) verbundenen Methylmethacrylat-Copolymerisats B) sind die in die Polymerkomponente einzubauenden Verbindungen X bekannt. Sie sind neben anderen, als Comonomere für Methylmethacrylat in den schon oben genannten deutschen Patentanmeldungen P 36 32 946.0, 37 09 562.5 und 37 19 239.6 beschrieben. In einer bevorzugten Ausführungsform steht R₁ für CH₃, d.h. bevorzugt leiten sich die Verbindungen X von der Methacrylsäure ab. Für X seien beispielhaft genannt Phenylmethacrylat, Benzylmethacrylat, Phenylethylmethacrylat, Phenylethylacrylat, N-Phenylmethacrylamid, N-Cyclohexylacrylamid, N-2-Methylcyclohexylmethacrylamid und gegebenenfalls auch N-Cyclohexylmaleinimid, N-4-Methylcyclohexylmaleinimid.
Die Mengen von Methylmethacrylat und X in B), d.h. die Anteile u und y liegen für u zwischen 10 und 98 Gew.-%, bevorzugt zwischen 50 und 95 Gew.-%, und für y zwischen 2 und 90 Gew.-%, bevorzugt zwischen 5 und 50 Gew.-%, wobei u und y = 100 Gew.-% beträgt.
Die Methylmethacrylat-Copolymerisate B sind als solche Polymere mit Glastemperaturen Tg ≧ 30 Grad C.

Das Copolymerisat B) kann in Mengen von 0 bis 15 Gew.-%, insbesondere in Mengen von 0,5 bis 5 Gew.-% bezogen auf B), noch weitere α,β-ungesättigte Verbindungen, wie beispielsweise Styrol, α-Methylstyrol, Acrylsäure, Methacrylsäure, C₁ bis C₆-Ester der Acrylsäure wie Methylacrylat und weitere Ester (C₂ bis C₆)- der Methacrylsäure, wie Ethylmethacrylat, einpolymerisiert enthalten. Auch der Zusatz von Verbindungen mit mehreren polymerisierbaren Doppelbindungen, d.h. von Vernetzern, ist möglich und gegebenenfalls zweckmäßig.
Die Herstellung des Schlagzäh-Modifizierungsmittels kann in Anlehnung an bekannte Verfahren wie folgt vorgenommen werden:
Im allgemeinen gibt man das Polymerisat P der Phase A) vor, vorzugsweise in Form einer Lösung in einem zur weiteren Verarbeitung geeigneten Lösungsmittel, beispielsweise in einem für die radikalische Polymerisation der Monomeren gemäß B) geeigneten Lösungsmittel (H. Rauch-Puntigam, Th. Völker, Acryl- und Methacrylverbindungen, Springer-Verlag, Heidelberg 1967; J. Brandrup, E.H. Immergut, Polymer Handbook, III-144 bis III-148, John Wiley 2975.) Dabei ist u.a. die Tendenz der Lösungsmittel zu Übertragungsreaktionen zu berücksichtigen.
Genannt seien z.B. Ester wie Butylacetat, Ethylacetat, Kohlenwasserstoffe wie Toluol, Ketone wie Aceton. Man geht im allgemeinen von Lösungen mit einem Gehalt von etwa 15 bis 50 Gew.-% des Polymeren P aus, denen die Monomeren und Polymerisationshilfsmittel beispielsweise durch Eintropfen zugesetzt werden. Die Polymerisation wird in der Regel bei erhöhter Temperatur beispielsweise im Bereich 80 bis 140 Grad C durchgeführt. Als Initiatoren können die an sich üblichen, wie Peroxide oder Azoverbindungen verwendet werden (vgl. H. Rauch-Puntigam, Th. Völker Acryl- und Methacrylverbindungen loc.cit). Bei tiefer siedenden Lösungsmitteln ist z.B. Dibenzoylperoxid anwendbar, während bei höher siedenden Lösungsmitteln z.B. tert-Butylverbindungen, wie tert.Butylperoctoat, zweckmäßig Anwendung finden können.

Bei Pfropfung von EPDM kann beispielsweise mit Butylacetat als Lösungsmittel zunächst bei ca. 120 Grad C die Polymerisation der Monomeren zur Komponente B) durchgeführt und anschließend bei ca. 80 Grad C, unter Zusatz von weiterem Methylmethacrylat, Vernetzer und Initiator, diese zu Ende geführt werden. Die Polymerisation kann zweckmäßigerweise in Gegenwart von Reglern, z.B. Mercaptanen, durchgeführt werden.

Vorteilhafterweise gewinnt man das Schlagzähmodifizierungsmittel dann durch Ausfällen aus der Lösung, beispielsweise mit Methanol als Fällungsmittel. Bei Herstellung des Modifiers durch Emulsionspolymerisation gewinnt man diesen vorteilhafterweise durch Abquetschen des Emulsionspolymerisats mit Hilfe eines Extruders.

### Zur Polycarbonat-Schlagzähmodifizierung

Die zu modifizierenden Kunststoffe sind Polycarbonate, vor allem thermoplastisch verformbare, aromatische Polycarbonate, d.h. solche Polycarbonate, die mit Bisphenolen, wie z.B. dem 2,2-Bis-(3,5-dimethyl-4-hydroxyphenyl)-propan, aber vor allem mit dem 2,2-Bis-(4-hydroxyphenyl)-propan, d.h. der als Bisphenol A bekannten Verbindung, hergestellt sind. Polycarbonate des Bisphenol A sind beispielsweise als Makrolon®-Typen Handelsprodukte. Die thermoplastischen, aromatischen Polycarbonate haben mittlere Molekulargewichte von mindestens etwa 10 000, vorzugsweise zwischen etwa 20 000 und etwa 200 000. Dies entspricht einem relativen Viskositätsbereich von 1,1 bis 1,5, gemessen an einer 0,5 Gew.-%-igen Lösung in Methylenchlorid bei 25 Grad C.

Das Abmischen der zu modifizierenden Polycarbonate mit den Schlagzäh-Modifizierungsmitteln kann in an sich bekannter Weise durch mechanisches Vermischen, beispielsweise auf Walzenknetern oder im Extruder vorgenommen werden (s. Ullmanns Encyklopädie der technischen Chemie 4. Auflage, Band 15, s. 281 - 285). Im allgemeinen liegt der Zusatz der Schlagzäh-Modifizierungsmittel zu dem zu modifizierenden thermoplastischen, aromatischen Polycarbonat bei 5 bis 70 Gew.-%, vorzugsweise bei 5 bis 50 Gew.-%, besonders bevorzugt bei 10 - 40 Gew.-%, bezogen auf die schlagzähmodifizierte thermoplastische Formmasse. Hierbei soll stets das Erreichen eines möglichst günstigen Gesamteigenschaftsbildes angestrebt werden.

Die Schlagzäh-Modifizierungsmittel sind den herkömmlichen Mitteln, die im wesentlichen Kombinationen von Styrol-Methylmethacrylat-Acrylnitril-Copolymerisaten und einer Zähphase sind, durch die höhere Verträglichkeit der B)-Phase der neuen Modifizierungsmittel mit dem Polycarbonat und damit einer besseren Verankerung im Gesamtsystem, bei energetischen Beanspruchungen, insbesondere Tieftemperatur-Beanspruchungen, deutlich überlegen.

Die hervorragende Eignung der Schlagzähmodifier soll durch die folgenden Beispiele gezeigt werden. Die Schlagzähigkeit (SZ) und die Kerbschlagzähigkeit (KSZ) wurden nach DIN 53 453 bestimmt. Die Bestimmung der VICAT-Erweichungstemperatur wird nach DIN 53 460 (VST/B) vorgenommen.

### BEISPIELE

### Beispiel 1:

Herstellung des Schlagzäh-Modifiers für Polycarbonat mit EPDM als Zähphase.

200 g EPDM (EPSYN® 55) werden unter Rühren innerhalb von 75 min zu einer 30-%igen Lösung in Butylacetat gelöst. Danach wird während weiterer 2 Stunden bei 120 Grad C unter Rühren ein Gemisch aus:
356 g Methylmethacrylat
40 g Phenylmethacrylat
4 g Methylacrylat
6 g tert-Butylperoctoat
600 g Butylacetat
hinzugefügt. Nach ca. 30-minütigem Kühlen auf 80 Grad C unter Rühren wird eine Mischung aus 10 g Triallylcyanurat, 10 g Methylmethacrylat sowie 4 g tert-Butylperoctoat zugesetzt, 2 Stunden bei 80 Grad C und danach 2 Stunden bei 90 Grad C gerührt.
Nach dem Abkühlen wird das Pfropfcopolymer in Methanol ausgefällt.

Der SZ-Modifier hat die Zusammensetzung:
67 Gew.-% Copolymerisat aus Methylmethacrylat-Phenylmethacrylat-Methylacrylat im Gewichtsverhältnis 89 - 10 - 1
und 33 Gew.-% EPDM

### Beispiel 2

### Herstellung des SZ-modifizierten PC

15 Gew.-% des im Beispiel 1 beschriebenen SZ-Modifiers werden mit 85 Gew.-% Makrolon® 3100 abgemischt und spritzgegossen. Es resultiert eine glänzende, opake Polymermischung mit hervorragender SZ, KSZ und Wärmeformbeständigkeit (Abb. 1 und Tab. 1).

### Beispiel 3

### Herstellung eines Schlagzähmodifiers mit Kern-Schale-Struktur für PC

In einem Wittschen Topf mit Heizung und Rührer werden 1 270 g Wasser (dest.), 0,5 g Essigsäure, 0,5 g Eisen-(II)-Sulfat und 125 g einer Monomeremulsion A, bestehend aus 1 460 g Wasser (dest.), 4 g C15-Paraffinsulfonat, 1 115 g Butylacrylat und 23 g Allylmethacrylat, vorgelegt und bei Raumtemperatur mit 0,15 g Diisopropylbenzolmonohydroperoxid und 1,3 g Natriumhydroxymethylsulfinat die Polymerisation gestartet. Nach Erreichen des Temperaturmaximums werden weitere 2 478 g der Monomeremulsion A hinzugegeben und mit 1,26 g Diisopropylbenzolmonohydroperoxid und 0,3 g Natriumhydroxymethylsulfinat polymerisiert (Kernpolymerisat).

Nach dem Abklingen der Reaktion wird die erhaltene Dispersion auf 90 Grad C aufgeheizt. Bei dieser Temperatur wird während 2 Stunden eine Monomeremulsion B, bestehend aus 1 460 g Wasser, 4 g C15-Paraffinsulfonat, 570 g Methylmethacrylat, 560 g Phenylmethacrylat, 12 g Methylacrylat und 6 g 2-Ethylhexylthioglykolat, zudosiert und in Gegenwart von 2 g Kaliumperoxidisulfat polymerisiert (Schalenpolymerisat).

### Beispiel 4

12 Gew.-% (entsprechend 6 Gew.-% Butylacrylat-Anteil) des in Beispiel 3 beschriebenen SZ-Modifiers werden mit 88 Gew.-% Makrolon® 3100 abgemischt und spritzgegossen (der Butylacrylat-Anteil entspricht etwa dem EPDM-Anteil aus Beispiel 2). Es resultiert eine glänzende, opake Polymermischung mit verbesserter Tieftemperatur-Kerbschlagzähigkeit und sehr guter Wärmeformbeständigkeit (Tabelle 2).

### Beispiel 5

12 Gew.-% (entsprechend 6 Gew.-% Butylacrylat-Anteil) des in Beispiel 3 beschriebenen SZ-Modifiers werden mit 88 Gew.-% Makrolon® 1189 ("niedermolekulares" Polycarbonat) abgemischt und spritzgegossen (der Butylacrylat-Anteil entspricht etwa dem EPDM-Anteil aus Beispiel 2). Die resultierende Polymermischung ist opak und besitzt einen guten Oberflächenglanz. Unter Beibehaltung der sehr guten Makrolon®-Wärmeformbeständigkeit wird die Kerbschlagzähigkeit des Makrolon® 1189 bei Raumtemperatur um 50 % verbessert (Tabelle 2).

**TABELLE 1**

| Eigenschaftsprofil der Mischung gemäß Beispiel 2 | | | |
|---|---|---|---|
| | | Blend | Makrolon^{®} 3100 Vergleich |
| SZ (NKS) (KJm⁻²) | 23 Grad C | ohne Bruch | ohne Bruch |
| KSZ (NKS) (KJm⁻²) | 23 Grad C | 55 (Scharnierbruch) | 48 |
| | 0 Grad C | 45 (Scharnierbruch) | 25 |
| | -20 Grad C | 23 | 8,5 |
| | -40 Grad C | 13 | 8,5 |
| VST/B | (Grad C) | 131 | 148 |

**TABELLE 2**

| Eigenschaften der Blends | | | |
|---|---|---|---|
| | Blend gem. Beispiel 4 | Blend gem. Beispiel 5 | Vergleichsbeispiel Makrolon® 1189 |
| SZ (23°C) (KJm⁻²) | ohne Bruch | ohne Bruch | ohne Bruch |
| KSZ (23°C) | 40.3 (Scharnierbruch) | 19.7 | 13 |
| 0°C | 31.5 (Scharnierbruch) | 11.7 | |
| -20°C | 12.5 | 7.9 | |
| -40°C | 9.1 | 6.5 | |
| VST/B (°C) | 142 | 136 | 138 |

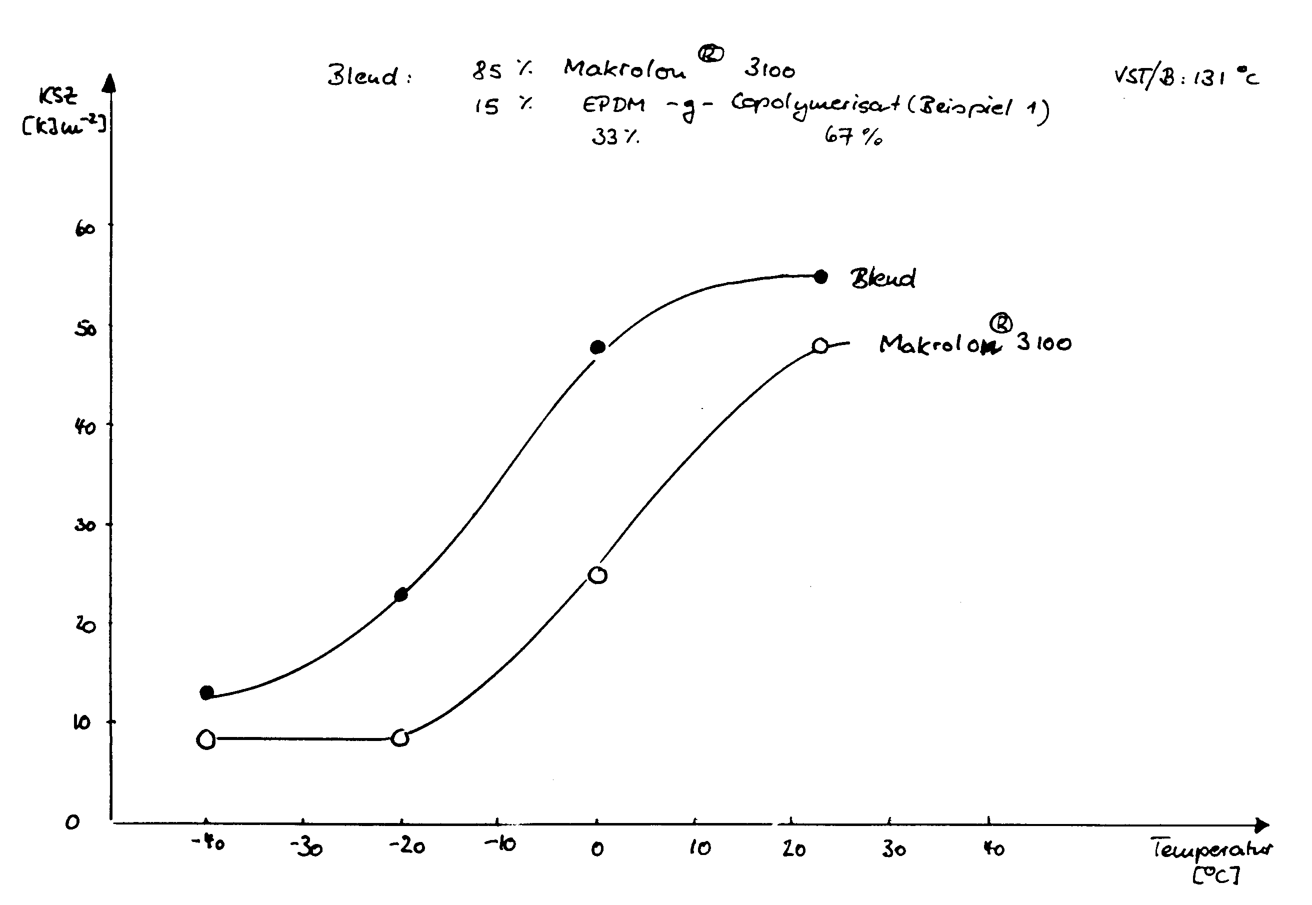

## Patentansprüche

1. Thermoplastische Formmassen und Formkörper aus
95 bis 30 Gew.-% von aromatischen Polycarbonaten insbesondere auf Bisphenol-A-Basis und
5 bis 70 Gew.-% eines mindestens zweiphasigen Mischpolymerisates als Schlagzäh-Modifizierungsmittel,
bestehend aus
A) mehr als 20 bis 90 Gew.-% eines gegebenenfalls vernetzten Polymeren P mit einer Glastemperatur Tg ≦ 10 °C, bevorzugt ≦ -10 °C, und
B) weniger als 80 bis 10 Gew.-% eines mit A) wenigstens teilweise kovalent verknüpften, für sich mit Polycarbonat verträglichen Methylmethacrylat-Copolymerisats mit einer Glastemperatur Tg > 30 °C der statistischen Zusammensetzung: 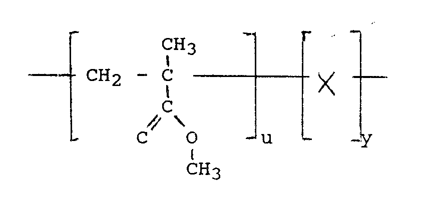 mit
X = 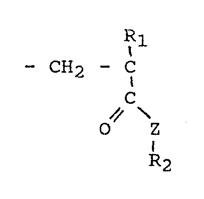 wobei
Z = - O - und/oder - NH -
R₁ = - H und/oder -CH₃
R₂ = -(CH₂)ₙ- W mit n = 0 bis 5, worin W, wenn Z = - O -, dies ein gegebenenfalls substituierter Arylrest mit 6 bis 12 C-Atomen ist und
wenn Z = - NH - , dies ein gegebenenfalls substituierter Arylrest mit 6 bis 12 C-Atomen, oder ein gegebenenfalls substituierter Cycloalkylrest mit 5 bis 9 C-Atomen ist, wobei
u zwischen 10 bis 98 Gew.-% und
y zwischen 2 bis 90 Gew.-%, bei u+y = 100 Gew.-%
liegen und das in Mengen von 0 bis 15 Gew.-% noch weitere Comonomere enthalten kann.

2. Thermoplastische Formmassen und Formkörper nach Anspruch 1, dadurch gekennzeichnet, daß der Polycarbonatanteil zwischen 95 bis 50 Gew.-%, bevorzugt zwischen 90 bis 60 Gew.-%, und der Mischpolymerisatanteil zwischen 5 bis 50 Gew.-%, bevorzugt zwischen 10 bis 40 Gew.-%, liegen.

3. Thermoplastische Formmassen und Formkörper nach den Ansprüchen 1 und 2, dadurch gekennzeichnet, daß im Mischpolymerisat in B) u zwischen 50 bis 95 Gew.-% und y zwischen 5 bis 50 Gew.-% liegen, wobei u+y = 100 Gew.-% B) beträgt.

4. Thermoplastische Formmassen und Formkörper nach den Ansprüchen 1 bis 3, dadurch gekennzeichnet, daß m Mischpolymerisat A) zu mehr als 5 Gew.-% kovalent mit B) verknüpft ist.

## Claims

1. Thermoplastic moulding compositions and moulded objects built up from
95 to 30 % by weight of aromatic polycarbonates in particular based on bisphenol A and
5 to 70 % by weight of an interpolymer having at least two phases as an impact modifier
consisting of
A) more than 20 and up to 90 % by weight of a crosslinked polymer P having a glass transition temperature Tg equal to or less than 10°C, preferably equal to or less than - 10°C
B) less than 80 and up to 10 % b.w. of a methyl methacrylate copolymer being compatible with polycarbonate and having a glass transition temperature above 30°C and a statistical composition 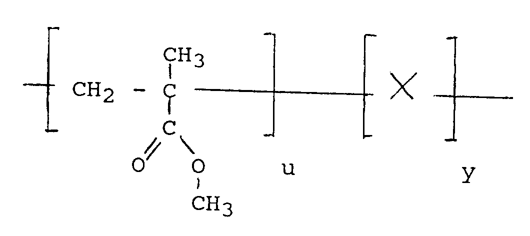
x being 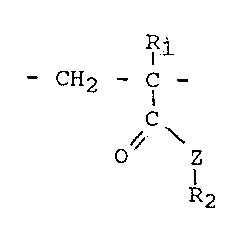 wherein
Z is -O- and/or NH-
R₁ is H and/or -CH₃
R₂ is -(CH₂)ₙ-W with n being 0 to 5, wherein W is -O- if Z is an optionally substituted aryl group with 6 to 12 carbon atoms and wherein W is an optionally substituted aryl group with 6 to 12 carbon atoms or an optionally substituted cycloalkyl group with 5 to 9 carbon atoms if Z is -NH and wherein
u is between 10 and 98 % by weight and
y is between 2 and 90 % by weight
u+y being 100 % by weight
which may contain additional comonomers in an amount of from 0 to 15 % b.w. and
which methylmethacrylate copolymer is at least partly covalently linked to A)

2. Thermoplastic moulding compositions and moulded objects according to claim 1, characterized in that the amount of polycarbonate is between 95 and 50 % by weight, preferably between 90 and 60 % by weight and the amount of interpolymer is between 5 and 50 % by weight, preferably between 10 and 40 % by weight.

3. Thermoplastic moulding compositions according to claims 1 and 2 characterized in that in B) in the interpolymer u is between 50 and up to 95 % by weight and y is between 5 and up to 50 % by weight, whereby u plus y equals 100 % of B)

4. Thermoplastic moulding compositions and moulded objects according to claims 1 to 3, characterized in that in the interpolymer A) to more than 5 % by weight is covalently linked to B).

## Revendications

1. Mélange thermoplastique de polymères et objets moulés se composant de
95 à 30 % en poids des polycarbonates ayant des groupes aromatiques et
5 à 70 % en poids d'un polymère avec au moins deux phases distinctes comme agent de modification améliorant la résistance aux chocs, constitué par
A) plus de 20 à 90 % en poids d'une phase elastomère formant au cas échéant un entrelacs et ayant une température de transition vitreuse T_{g} de moins de 10°C, de préférence inférieure à -10°C et
B) moins de 80 à 10 % en poids d'un copolymère de méthacrylate de méthyle étant au moins partiellement joint avec la phase A) et ayant une température de transition vitreuse T_{g} de plus de 30°C avec la constitution statistique: 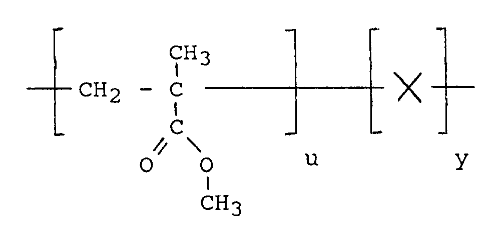 avec
X = 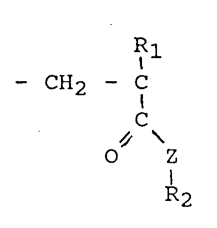 avec
Z = - O - et/ou - NH -
R¹ = - H et/ou - CH₃
R₂ = (CH₂)ₙW avec n = o à 5, dans lequel radical, quand Z = - O -, W = un radical aromatique avec 6 à 12 atomes de C, ayant au cas échéant des substituants, et quand Z = - NH -, W = un radical aromatique avec 6 à 12 atomes des C ayant au cas échéant des substituants ou un radical cycloalkylique avec 5 à 9 atomes de C ayant au cas échéant des substituants,
u = 10 à 98 % en poids
= 2 à 90 % en poids et
u+y = 100 % en poids
dans lequel copolymere b) O à 15 % en poids des autres monomères peuvent être présent.

2. Mélange thermoplastique de polymères et objets moulés selon la revendication 1,
caracterisé en ce que la portion du polycarbonate se monte de 95 à 50 % en poids, de preférence se monte de 90 à 60 % en poids et la portion du copolymère B) se monte de 5 à 50 % en poids, de préférence se monte de 90 à 60 % en poids et la portion du copolymère B) se monte de 5 à 50 % en poids, de préférence se monte de 10 à 40 % en poids.

3. Mélange thermoplastique de polymères et objets moulés selon la revendication 1 ou 2,
caracterisé en ce que dans le copolymere B) u se monte de 50 à 95 % en poids et y se monte de 5 à 50 % en poids à condition que la somme u + y fasse 100 % en poids.

4. Mélange thermoplastique de polymères et objets moulés selon les revendications 1 à 3,
caracterisé en ce que dans le polymère avec au moins deux phases distinctes il y a plus de 5 % en poids de A) étant joint par une liaison de covalence avec B).
